# EUROPEAN PATENT APPLICATION

(11) **EP 4 822 594 A1**
(43) Date of publication of application: **14.10.2026**
(21) Application number: 25169434.5
(22) Date of filing: 09.04.2025
(51) Int. Cl.: G06N 3/045, G06N 3/0475

(54) **CONTEXTUALLY ADAPTING INFERENCE TIME COMPUTE**

(71) Applicant: GDM Holding LLC, Mountain View CA 94043 (US)
(72) Inventor: SHARIFI, Matthew, 8002 Zurich (CH)
(74) Representative: Kennedy, Richard E.

(57) **Abstract**

This specification describes a method of contextually adapting inference-time compute of an inference system comprising a trained generative model. The method is implemented by one or more data processing apparatus and comprises: determining a communication modality for data transfer to and/or from the inference system; determining an inference-time compute setting for the inference system in dependence on the communication modality, and generating an output of the inference system in dependence on the inference-time compute setting.

## Description

### BACKGROUND

This specification relates to processing data using machine learning models.

Machine learning models receive an input and generate an output, e.g., a predicted output, based on the received input. Some machine learning models are parametric models and generate the output based on the received input and on values of the parameters of the model.

Some machine learning models are deep models that employ multiple layers of models to generate an output for a received input. For example, a deep neural network is a deep machine learning model that includes an output layer and one or more hidden layers that each apply a non-linear transformation to a received input to generate an output.

### SUMMARY

This specification describes a system implemented using one or more data processing apparatus at one or more locations, which adapts inference time compute in dependence on communication modality.

One example implementation described in this specification relates to a method of contextually adapting inference-time compute of an inference system comprising a trained generative model. The method is implemented by one or more data processing apparatus and comprises determining a communication modality for data transfer to and/or from the inference system; determining an inference-time compute setting for the inference system in dependence on the communication modality, and generating an output of the inference system in dependence on the inference-time compute setting.

Determining the inference-time compute setting may comprise determining an amount of reasoning tokens to be used when generating the output of the inference system. The reasoning tokens may comprise hidden reasoning tokens.

Generating an output of the inference system in dependence on the inference-time compute setting may comprise generating a number of candidate outputs, wherein the inference-time compute setting determines the number of candidate outputs to generate in response to a given input.

In some examples, the inference system comprises a plurality of trained generative models. The method may include determining the inference-time compute setting by selecting a selected one of the plurality of trained generative models. Generating the output of the inference system in dependence on the inference-time compute setting may comprise generating an output using the selected one of the plurality of trained generative models. The plurality of trained generative models may have different numbers of parameters.

In some examples, the inference-time compute setting may be based on a latency condition for the communication modality.

The communication modality may be selected from a communication modality group which includes an asynchronous communication modality. The communication modality group may include a voice communication modality. The communication modality group may include a chat-based communication modality, e.g., a text chat communication modality.

In some examples, the method includes receiving a generative model input, wherein the communication modality is a communication modality via which the generative model input was received.

In some examples, the method includes receiving a generative model input and generating, in response, a first generative model output using the inference system, wherein the first generative model output is communicated via a first communication modality. The method may further comprise generating, in response to the generative model input, a second generative model output using the inference system, wherein the second generative model output is communicated via a second communication modality. Determining an inference-time compute setting for the inference system in dependence on the communication modality may comprise determining an inference-time compute setting for generating the second generative model output.

In some examples the inference-time compute setting for generating the second generative model output causes the inference system to generate the second generative model output using an increased amount of computing resources compared to the computing resources required for generating the first generative model output.

In some examples, generating the second generative model output causes the inference system to generate the second generative model output using an increased number of floating point operations compared to the number of floating point operations used to generate the first generative model output.

The inference system may be configured to receive an input prompt and to generate a responsive output, e.g., in text, image, video and/or audio form. The trained generative model may comprise a language model, e.g., a multi-modal language model such as a vision language model (VLM). The trained generative model may, for example, be configured as a digital assistant, chat bot, or coding partner. For example, the inference system may comprise a digital assistant capable of handling both text and voice inputs. The inference system (e.g., digital assistant) may communicate with users via different modalities (e.g., voice communication, chat-based communication, or email). In various examples, the inference system (e.g., digital assistant) may provide its output using the same modality, or a different modality, to that used to provide its input.

In some examples, the method is applied to simulating a physical environment, wherein the input comprises simulation parameters or initial conditions, and the generated output comprises simulation output data representing predicted states or properties. Wherein the determined communication modality is an asynchronous modality, the determined inference-time compute setting may be a high compute setting, and generating the output may comprise generating simulation output data with higher fidelity using an increased number of reasoning tokens or evaluating multiple candidate simulation trajectories. Wherein the determined communication modality is a synchronous modality, the determined inference-time compute setting may be a low compute setting, and generating the output may comprise rapidly generating simulation output data suitable for timely feedback within a technical control loop. The simulation output data may be used for designing a physical article or generating training data.

In some examples, the method is applied to controlling an agent, such as a robot, interacting with an environment, wherein the input data comprises task instructions or sensor observations, and the generated output comprises action selection information or control signals for the agent. Wherein the communication modality indicates higher latency tolerance (e.g., text input), the determined inference-time compute setting may be a high compute setting, and generating the output may comprise performing extensive planning using reasoning tokens to produce a detailed sequence of actions or policy code. Wherein the communication modality indicates a low latency requirement (e.g., voice command), the determined inference-time compute setting may be a low compute setting, and generating the output may comprise generating a simple, immediate action command or triggering a safety routine. The generated output may comprise robot control data.

In some examples, the inference system is configured for tasks such as visual question answering (VQA) or code generation, wherein the input comprises data (e.g., image, text) and optionally a task query, and the generated output comprises data responsive to the input. For VQA, determining an asynchronous communication modality may lead to a high compute setting for generating a detailed textual answer, whereas determining a synchronous chat modality may lead to a low compute setting for generating a fast, concise answer. For code generation, determining an asynchronous modality may lead to a high compute setting for generating higher-quality code, whereas determining a synchronous modality for real-time code completion may lead to a low compute setting for generating rapid code suggestions.

In some examples, the method is applied to media generation, wherein the input comprises a prompt, and the generated output comprises media data (e.g., image, video, audio). Wherein the determined communication modality is associated with higher latency tolerance, the determined inference-time compute setting may be a high compute setting, and generating the output may comprise generating high-resolution or photorealistic media data using a larger model or more generation steps. Wherein the determined communication modality is associated with low latency requirement, the determined inference-time compute setting may be a low compute setting, and generating the output may comprise rapidly generating lower-resolution or preview media data using a smaller model or fewer steps.

In some examples, the method is applied to natural language processing tasks such as document summarization or machine translation, wherein the input comprises input text, and the generated output comprises processed text. Wherein the determined communication modality is an asynchronous interface, the determined inference-time compute setting may be a high compute setting, and generating the output may comprise generating a high-fidelity summary or translation using in-depth analysis or more reasoning tokens. Wherein the determined communication modality is a real-time chat window, the determined inference-time compute setting may be a low compute setting, and generating the output may comprise generating a brief summary or a faster translation using a faster algorithm or smaller model.

In some examples, the method is applied to analyzing datasets and generating insights or reports, wherein the input comprises input data and an analysis request, and the generated output comprises analysis results or a report. Wherein the determined communication modality is an asynchronous channel, the determined inference-time compute setting may be a high compute setting, and generating the output may comprise generating a comprehensive data analysis report using complex statistical analysis or extensive reasoning. Wherein the determined communication modality is a synchronous interface, the determined inference-time compute setting may be a low compute setting, and generating the output may comprise generating a prompt, concise explanation or insight using simple data aggregation or quick pattern matching.

In some examples, the method assists in monitoring and controlling complex technical systems, wherein the input comprises data representing the system's state, and the generated output comprises system status information, diagnostic suggestions, or control recommendations. Wherein the determined communication modality permits higher latency, the determined inference-time compute setting may be a high compute setting, and generating the output may comprise generating in-depth trend analysis or optimized control parameters via detailed simulations or optimization. Wherein the determined communication modality requires low latency, the determined inference-time compute setting may be a low compute setting, and generating the output may comprise generating a quick summary or a rapidly generated diagnostic suggestion.

In some examples, the method is implemented by a digital assistant guiding a human user through a real-world task, wherein the input comprises task-related information, and the generated output comprises instructions for the user (e.g., voice, text, image). Wherein the communication modality is associated with moderate latency tolerance, the determined inference-time compute setting may be a high compute setting, and generating the output may comprise generating comprehensive, multi-part instructions based on task planning and reasoning. Wherein the communication modality demands very low latency, the determined inference-time compute setting may be a low compute setting, and generating the output may comprise generating a concise answer via quick lookup or use of a faster model.

Another example implementation described in this specification relates to a data processing apparatus configured to perform any of the methods described herein.

Another example implementation described in this specification relates to one or more non-transitory computer-readable media storing instructions that are executable by one or more data processing apparatus to cause the one or more data processing apparatus to perform the method as described herein.

It will be appreciated that features described in the context of one aspect may be combined with features of one or more other aspects.

Particular embodiments of the subject matter described in this specification can be implemented so as to realize one or more of the following advantages.

By dynamically adjusting inference-time compute in dependence on communication modality, the described techniques provide the benefits of higher inference-time compute, subject to latency constraints, whilst providing responses with a latency that is appropriate for the communication modality. In this way, techniques described in this specification leverage the benefits of higher inference-time compute whilst achieving a response latency which is matched to the communication modality, This approach reduces the computational resources used by the inference system compared to existing chain-of-thought systems.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

Figure 1 shows an inference system according to an example implementation.
Figure 2 illustrates another inference system according to an example implementation.
Figure 3 illustrates another inference system according to an example implementation.
Figure 4 is a flow diagram illustrating an exemplary method for contextually adapting inference-time compute of an inference system according to an example implementation.

### DETAILED DESCRIPTION

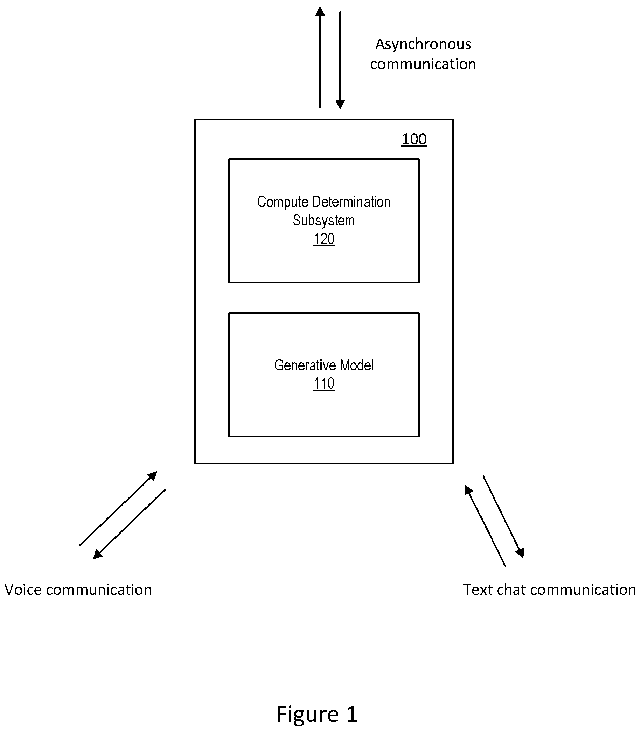

Figure 1 shows an inference system 100 according to an example implementation. The inference system 100 may be implemented using one or more data processing apparatus at one or more locations, e.g., a distributed data processing apparatus. For example, the inference system 100 may be implemented as one or more computer programs on one or more computers at one or more locations.

As shown, the inference system 100 includes a trained generative model 110 and a compute determination subsystem 120. The generative model 110 may for example comprise a trained language model, such as a large language model (LLM) which is configured to generate text in response to receiving an input prompt. In some examples, the LLM may comprise a multimodal large language model.

The inference system 100 may be configured to communicate with users over a network. For example, the inference system 100 may comprise a cloud-based system, which is configured to communicate with users via the internet. In an alternative example, the inference system 100 may comprise a locally-hosted system, which is configured to communicate with users via a local area network (LAN).

The inference system 100 is configured to receive requests from users over the network, and to process each request to generate a corresponding response, which is sent back to the user over the network. Each request may include text in the form of a prompt for the generative model. In some cases, the prompt may be input into the generative model directly, or alternatively it may be preprocessed to form an input for the generative model. For example, each prompt may be combined with a "system prompt", which may be set by a developer to guide the overall behavior of the LLM. The combined prompt may then be input into the LLM. In the case of voice communication, the voice input may be transcribed into text for processing by the LLM, either at a user device or at the inference system 100. Alternatively, where the LLM is a multimodal LLM capable of processing voice signals directly, the voice input may be provided as a direct input to the multimodal LLM.

As shown in Figure 1, users may communicate with the inference system 100 via different communication modalities such as voice communication, chat-based communication (e.g., text chat) and email. Voice communication is an example of a synchronous form of communication. That is, voice communication is intended for "real-time" communication, and therefore low response-latency is desirable. Email is an example of an asynchronous form of communication, i.e. "real-time" communication is not required, and therefore higher response-latency is acceptable. Other communication modalities, such as text chat communication may be used for both synchronous and asynchronous communication, depending on context, such that a medium level of latency may be acceptable.

In general, a user may interact with a user computing device, such as a laptop computer, desktop computer, smartphone or tablet, in order to communicate with the inference system 100. The user computing device may provide an interface for the user to interact with the inference system 100. For example, where the communication modality is email, the user may interact with a native or web-based email application to compose and send an email using the user computing device. Similarly, where the communication modality is text chat, the user computing device may provide an instant messaging application which the user may interact with to compose and send an instant message. As another example, the user computing device may provide a dialogue interface for the user to interact with the inference system 100 via text and/or voice communication.

The compute determination subsystem 120 is configured to determine the communication modality of a request that is received by the system 100. For example, the request may include metadata specifying the communication modality. The compute determination subsystem 120 may process the request to determine the communication modality as specified in the metadata. Thus, the compute determination subsystem 120 may determine that the communication modality for the request is, for example, email communication, text chat communication, or voice communication.

The compute determination subsystem 120 is configured to determine an inference-time compute setting in dependence on the determined communication modality. In general, the inference-time compute setting determines the amount of computing resources that may be used when generating an output, e.g., the computational budget. That is, higher inference-time compute settings specify that a higher amount of computing resources may be used, while lower inference-time compute settings specify that a lower amount of computing resources may be used. The amount of computing resources that are used in generating an output of the inference system 100 may be measured as the number of floating point operations that are performed by the inference system 100 when generating an output.

The compute determination subsystem 120 may determine an inference-time compute setting dependent on a response latency associated with the communication modality. For instance, if the communication modality is determined to be email communication, the compute determination subsystem 120 may assign a relatively high inference-time compute setting. If the communication modality is determined to be voice communication, the compute determination subsystem 120 may assign a relatively low inference-time compute setting. If the communication modality is determined to be a text chat communication, the compute determination subsystem 120 may assign an inference-time compute setting which is intermediate between a low setting and a high setting. In some implementations, compute determination subsystem 120 may include a compute-prediction machine learning model which is configured to determine an inference-time compute setting in dependence on the communication modality, optionally also taking into account one or more other factors, such as the number of message recipients. The compute-prediction machine learning model may be a pre-trained model. In some implementations, the compute-prediction machine learning model may be further adapted/trained online based on signals such as query retries (e.g., if an answer was not considered adequate) and user polling/cancels (e.g., if a response took too long).

As requests are received by the inference system 100, the compute determination subsystem 120 may process the requests to determine a respective inference-time compute setting for each request. For each request, the inference system 100 generates a corresponding output (i.e., a response) in dependence on the inference-time compute setting that is determined for the request. In the case that a high degree of inference-time compute is used, an interstitial response may be provided to inform the user that there may be a delay before the response is provided.

In this way, the inference system 100 dynamically adjusts the inference-time compute setting based on the communication modality of received requests. More specifically, the inference system 100 assigns an inference-time compute setting in dependence on the latency requirement for the communication modality. As an example, for a real-time communication modality, the inference-time compute setting may indicate that hidden reasoning tokens should not be used when generating an output, while for an email communication modality, hidden reasoning tokens may be enabled (e.g., with no limit). More generally, a relatively high inference-time compute setting (e.g., specifying a higher number of hidden reasoning tokens, or no limit to such tokens) may be applied if low latency communication is not required, and a relatively low inference-time compute setting (e.g., specifying a lower number, or zero, hidden reasoning tokens) may be applied if low latency communication is required.

The inference system 100 adjusts the amount of inference-time compute used to process a request based on the inference-time compute setting that is determined for the request. Scaling up inference-time compute (e.g., through chain-of-thought reasoning) provides benefits in relation to accuracy and reasoning, but on the other hand increases latency in providing a response. The inventor has recognized that this increase in latency may be acceptable in some situations (e.g., for asynchronous communication) but that it may not be acceptable in others (e.g., for synchronous communication). By dynamically adjusting inference-time compute in dependence on communication modality, example techniques described in this specification provide the benefits of higher inference-time compute, subject to latency constraints, whilst providing responses with a latency that is appropriate for the communication modality. That is, techniques described in this specification leverage the benefits of higher inference-time compute whilst achieving a response latency which is matched to the communication modality. This approach reduces the computational resources used by the inference system compared to existing chain-of-thought systems.

Various methods of varying the inference time compute of the inference system 100 are possible. In one example, the inference system 100 adds a system prompt to the prompt that is provided by the user, before inputting the combined prompt to the generative model (e.g., LLM) 110. The system prompt may for example include an instruction to the LLM to think step-by-step, e.g., in a particular step-by-step format. The system prompt may include an instruction to provide its reasoning within a set of tags, e.g., <reasoning> ... </reasoning>. The tokens that are used to generate the text within the <reasoning> </reasoning> tags may be referred to as "reasoning tokens". More generally, the term "reasoning tokens" refers to tokens used in an additional/incorporated reasoning system (e.g., a chain of thought process) rather than in the generative model's native reasoning system.

In some implementations, the reasoning portion, i.e., the text within the reasoning tags (and, optionally, the tags themselves), may be stripped out by the inference system 100 before sending the response to the user. In this case, the tokens that are used to generate the stripped-out text may be referred to as "hidden reasoning tokens" (or simply "hidden tokens"). More generally, the term "hidden reasoning tokens" (or "hidden tokens") refers to tokens used in an additional/incorporated reasoning system (e.g., a chain of thought process) which are not presented to a user. In some examples, the reasoning portion may be selectively displayed to the user. For example, the reasoning portion may not be presented to the user by default, but an option may be provided to cause the reasoning portion to be presented to the user. For example, a selectable element may be displayed which causes the reasoning portion to be displayed when the selectable element is selected by a user.

The number of reasoning tokens (whether hidden or not) to use may be a parameter of the system which may be set in accordance with the inference time compute setting. For instance, the inference time compute setting for a given request may be a non-negative integer, and the parameter that determines the number of reasoning tokens may be set equal to that non-negative integer. In some examples, the number of reasoning tokens to be used may be specified in the system prompt, e.g., the LLM may be instructed to perform its reasoning using a particular number of reasoning tokens, as specified in the system prompt. In some examples, the number of reasoning tokens to be used may be specified in the system prompt with a word /metric (rather than a fixed number) so as to guide the LLM, rather than being deterministic.

Other methods for adjusting the inference time compute of the inference system 100 are also possible. For example, the inference system 100 may generate a number of candidate outputs, and may use a verifier to select an answer according to a particular metric, e.g., based on scores that are assigned to the candidate outputs. The inference-time compute setting may determine the number of candidate outputs to generate in response to a given input. The verifier may for example be a hard-coded heuristic, or a learned reward model, which assigns a score to each candidate output. In some embodiments, e.g., where the LLM is prompted to perform chain-of-thought reasoning, each candidate output may include a number of intermediate steps, which may each be scored individually. The scores for the intermediate steps may be combined to form a final score for the candidate answer. Various search strategies for forming candidate answers for chain-of-thought reasoning (e.g., beam search) are known per se to those skilled in the art.

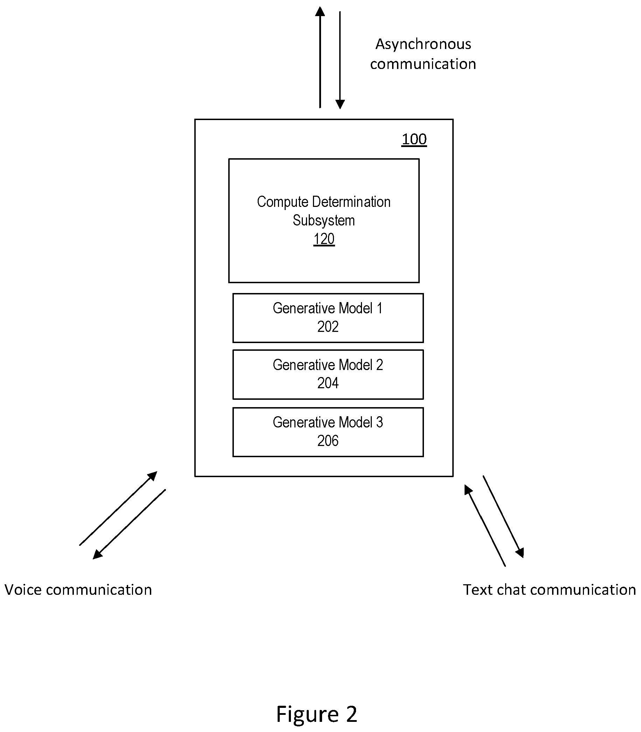

Figure 2 illustrates an alternative approach to generating an output of the inference system 100 in dependence on an inference time compute setting. In this example, the inference system 100 includes a plurality of generative models 202, 204, 206. Each generative model may be a trained LLM with a different number of parameters. LLM 202 may be a lightweight model which is optimized for low latency. LLM 206 may have a larger number of parameters but may respond with higher latency. LLM 204 may have an intermediate number of parameters and may respond with intermediate latency. For a given request, the inference system 100 selects one of the models 202, 204, 206 for use in processing the request, in dependence on the inference-time compute setting. For example, if the inference-time compute setting is below a first threshold, the lightweight model 202 may be used, thus enabling a low latency response (e.g., for voice communication). If the inference-time compute setting is above the first threshold, but below a second (higher) threshold, the intermediate model 204 may be used to process the response. If the inference-time compute setting is above the second threshold, the model with the larger number of parameters 206 may be used to process the response.

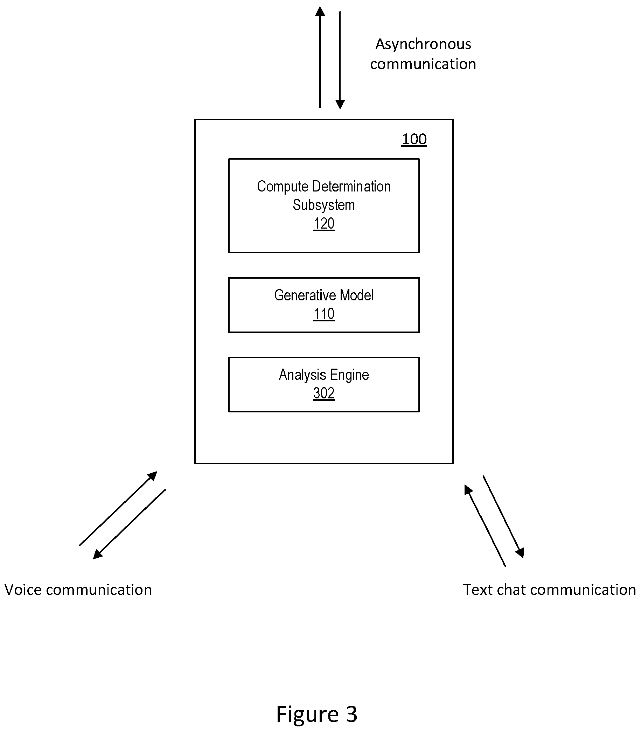

In some implementations, the inference-time compute setting for the inference system may be determined in accordance with a communication modality for data transfer from (rather than to) the inference system 100. This is illustrated in the example of Figure 3. As shown, in this case the inference system 100 includes an analysis engine 302 to analyse a prompt provided by a user to determine whether additional inference-time compute would be beneficial. For example, the analysis engine 302 may be a hard-coded heuristic or learned model which processes the prompt to provide a measure of the complexity of the prompt. The inference system 100 may determine respective communication modalities for one or more data transfers from the inference system 100, based on the output of the analysis engine 302. For example, if the analysis engine 302 determines that additional inference-time compute is not necessary for a given prompt, then the inference system 100 may determine that a response may be communicated via the same modality that the prompt was received, which may be a low-latency communication modality such as voice or an intermediate-latency communication modality such as text chat. Alternatively, if the analysis engine 302 determines that additional inference-time compute would be beneficial, the inference system 100 may determine that a first response should be communicated via the same modality that the prompt was received, and that a second response may be communicated via a selected asynchronous modality, such as email. In this way, the inference system 100 may provide an initial response to say " "I think the best solution is X, but is it ok if I send you an email shortly with a more comprehensive answer?". The more comprehensive answer may then follow later by email if the user requests it.

The compute determination subsystem 120 may determine an inference-time compute setting for each response in dependence on the communication modality for the response. For example, for a voice response (e.g., initial voice response), the inference system 100 may determine a low inference-time compute setting. For an email response (e.g., subsequent email response), the inference system 100 may determine a high inference-time compute setting. The inference system 100 then generates its outputs in dependence on the inference-time compute setting, as discussed above. Since the second output (e.g., email response) is generated using a higher inference-time compute setting, it uses an increased amount of computing resources (in particular an increased number of floating point operations) compared to the first output (e.g., initial voice response).

In some example implementations, the system 100 may take into account further factors, in addition to communication modality, when determining an inference-time compute setting. For example, email or text-chat requests that are received by the system 100 may include metadata specifying number of recipients (size of audience). The system 100 may determine a higher inference-time compute setting (e.g., specifying a higher number of hidden reasoning tokens, or a higher number of candidate answers) if the number of recipients is above a threshold.

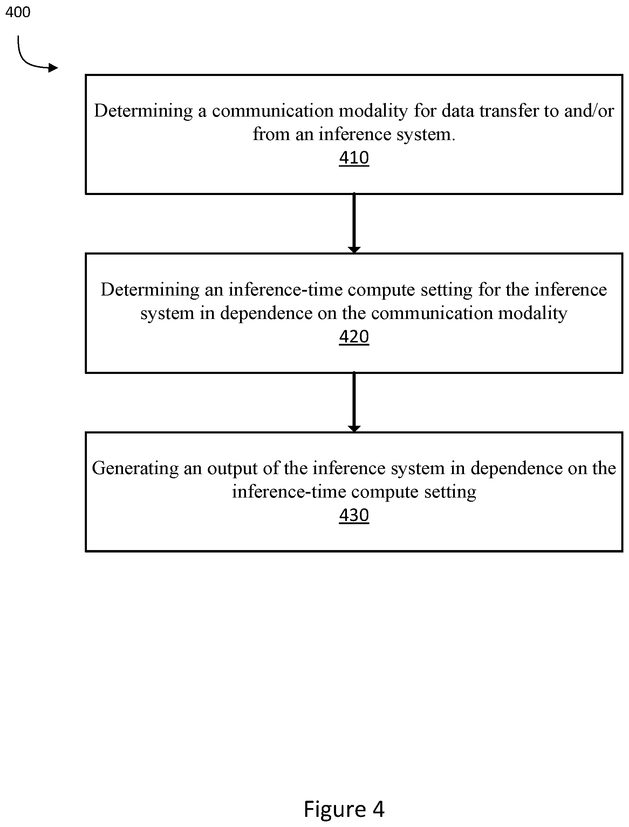

Figure 4 is a flow diagram illustrating an example method 400 for contextually adapting inference-time compute of an inference system. The inference system comprises a trained generative model such as a large language model. As shown, the method 400 includes determining 410 a communication modality for data transfer to and/or from the inference system. The method also includes determining 420 an inference-time compute setting for the inference system in dependence on the communication modality. An output of the inference system is generated 430 in dependence on the inference-time compute setting.

The techniques described herein can be applied across a diverse range of technical fields. The selection of the inference-time compute setting, driven by factors such as the latency requirements or expectations associated with the determined communication modality, facilitates a dynamic adjustment of computational resource usage. This allows for optimizing the balance between the complexity, depth, quality, or fidelity of the generated output and the responsiveness or latency of the inference system. In addition to finding use in digital assistant and chat bot applications, this adaptability may be advantageous in applications including, but not limited to, simulation of physical environments, reinforcement learning for agent control, robotics, code generation, visual question answering, and media generation.

In implementations related to simulating physical environments, the inference system may be used to generate predicted states of the environment over time. The generated simulation output data may be used to control a system, design or verify physical articles, or train other machine learning models. For example, a simulation task may comprise simulating fluid dynamics to assess aerodynamic properties of a vehicle design, simulating structural mechanics to verify the integrity of a building design under load, or simulating material properties for designing new materials. An example specific implementation involves: receiving a request related to a simulation task via a determined communication modality; determining an inference-time compute setting based on said modality; and generating simulation output data, representing predicted states or properties relevant to the task, using the determined setting. In one scenario, the determined communication modality is an asynchronous communication modality, such as email, associated with a higher latency tolerance, for a task such as verifying a technical design. In this case, determining the inference-time compute setting comprises selecting a high compute setting. Generating the output using this high compute setting may involve, for example, utilizing a larger generative model from a plurality of available models, employing an increased number of hidden reasoning tokens for detailed modeling of complex technical interactions, or generating and evaluating multiple candidate simulation trajectories before selecting a final output. This approach achieves higher simulation fidelity, producing output data that provides a more reliable basis for design verification or for generating high-quality training data intended for training a downstream technical system, such as a control policy for a physical robot. In another example scenario, the determined communication modality is a synchronous modality, such as a real-time data stream from sensors monitoring a technical process, associated with a low latency requirement, for a task like providing input for real-time control. Here, determining the inference-time compute setting comprises selecting a low compute setting. Generating the output using this low compute setting may involve utilizing a smaller, faster generative model or using fewer or zero hidden reasoning tokens. This prioritizes the rapid generation of predicted environment states or properties, producing simulation output data quickly enough to be useful for timely feedback within a technical control loop (e.g., adjusting parameters in an ongoing industrial process based on the rapid prediction), even if the prediction has lower precision.

In some implementations, the inference system can be applied in the context of reinforcement learning or robotics for controlling an agent (e.g., a physical robot, autonomous vehicle, simulated agent, or software agent) interacting with an environment. An example specific implementation involves: determining a communication modality associated with receiving input data (e.g., task instructions or sensor observations); determining an inference-time compute setting based on the modality; and generating an output comprising action selection information or control signals for the agent using the determined setting. In one example scenario, the input comprises a complex, multi-step task instruction received via a text-based interface or planning document (associated with higher latency tolerance). The determined communication modality leads to selecting a high compute setting. Generating the output using this high compute setting may involve the generative model performing extensive planning, using chain-of-thought reasoning facilitated by hidden reasoning tokens, to produce a detailed sequence of actions, a complex policy code output, or optimized control parameters. In another example scenario, the input is an urgent voice command (e.g., "Stop!") received via a voice communication modality determined to have a low latency requirement. Determining the inference-time compute setting comprises selecting a low compute setting. Generating the output using this low compute setting may involve bypassing complex reasoning and triggering a pre-defined safety routine, using the fastest available lightweight model, or generating a simple, immediate action command to ensure rapid response. In this example, the output generated by the inference system thus comprises robot control data usable to control the robot. This adaptive control approach based on communication modality can be applied to agents in various domains such as manufacturing control, resource management (e.g., data centers, power generation), drug design, or circuit design and routing.

The adaptive compute mechanism is particularly beneficial when the inference system employs foundation models or other large generative models, e.g., for tasks like visual question answering (VQA), code generation, text summarization, or translation. An example specific implementation involves: receiving an input comprising data (e.g., image, text) and, optionally, a task query via a determined communication modality; determining an inference-time compute setting based on the modality; and generating an output responsive to the input and query using the determined setting. For a VQA task: if a user submits an image and a complex analytical question via an asynchronous channel (e.g., email, web portal), a high compute setting may be determined. Generating the output may then involve deep reasoning, accessing external knowledge, using many hidden reasoning tokens, resulting in a detailed, well-structured textual answer. Conversely, if the VQA query is simple and posed via a synchronous chat interface requiring low latency, a low compute setting is determined, leading to the generation of a fast, concise answer, using a smaller model variant. For a code generation task: an asynchronous request for a complex software module may trigger a high compute setting, allowing the generation of higher-quality, optimized or verified code, e.g. by using more reasoning steps. In contrast, real-time code completion suggestions within an Integrated Development Environment (IDE) represent a synchronous interaction requiring very low latency. Here, a low compute setting is determined, and the generated output comprises rapid code suggestions, prioritizing speed. The output generated by the inference system may comprise textual data representing the answer or the generated code.

In the domain of media generation, such as generating images, video, or audio based on prompts, the inference system may adapt the generation process based on the communication modality. An example specific implementation involves: receiving a prompt (e.g., text description) via a determined communication modality; determining an inference-time compute setting based on the modality; and generating media data using the determined setting. In one example scenario, a user submits a detailed text prompt via a web form or dedicated interface (associated with higher latency tolerance) requesting a high-resolution image. The determined communication modality leads to selecting a high compute setting. Generating the output using this high compute setting involves using a larger, more complex generative model (e.g., a large diffusion model), performing more generation steps (e.g., diffusion denoising steps), or employing sophisticated prompt interpretation, resulting in high-resolution or photorealistic image data. In another example scenario, a user requests a quick image sketch or concept via a synchronous chat interface. A low compute setting is determined due to the low latency requirement. Generating the output using this low compute setting involves using a smaller, faster generative model, fewer generation steps, or generating a lower-resolution preview image, ensuring a rapid response suitable for the chat context. The output generated by the inference system may comprise data representing the generated image, video, or audio.

The adaptive inference compute mechanism is also valuable for various natural language processing (NLP) tasks performed by the inference system, such as document summarization or machine translation. An example specific implementation involves: receiving input text (e.g., a document to be summarized or text to be translated) and a task request via a determined communication modality; determining an inference-time compute setting based on the modality; and generating an output comprising processed text (e.g., a summary or translation) using the determined setting. In one example scenario, a user submits a lengthy research paper via an asynchronous interface (e.g., document upload portal) requesting a comprehensive summary. The modality implies higher latency tolerance, leading to the selection of a high compute setting. Generating the output using this high setting involves the generative model performing in-depth semantic analysis, complex relationship extraction, or employing multi-pass refinement, using more hidden reasoning tokens or a larger model, resulting in a detailed, nuanced, and high-fidelity textual summary. Similarly for translation, an asynchronous request may trigger high compute for higher translation accuracy and preservation of stylistic elements. In another example scenario, a user pastes text into a real-time chat window requesting a quick gist or an immediate translation. The synchronous nature dictates a low latency requirement, leading to a low compute setting. In this example, generating the output prioritizes speed, using a faster summarization algorithm, a smaller translation model, or fewer reasoning steps, producing a brief summary or a faster, less nuanced translation suitable for immediate understanding. The output generated by the inference system may comprise textual data, e.g. representing the summary or the translated text.

In some implementations, the inference system can be employed to analyze datasets (structured or unstructured) and generate insights or reports. An example specific implementation involves: receiving input data (e.g., database tables, logs, text corpora) and an analysis request via a determined communication modality; determining an inference-time compute setting based on the modality; and generating an output comprising analysis results or a report using the determined setting. In one example scenario, a request for a deep dive analysis report on quarterly sales data is submitted via an asynchronous channel (e.g., email or a reporting tool). Associated with higher latency tolerance, this leads to a high compute setting. Generating the output involves the generative model performing complex statistical analysis, identifying non-obvious correlations, generating multiple types of visualizations for consideration, or constructing a narrative report using extensive reasoning, resulting in a comprehensive data analysis report. In another example scenario, an analyst queries a real-time monitoring dashboard via a synchronous interface asking for an immediate explanation of a sudden spike in website traffic. The low latency requirement leads to a low compute setting. Generating the output focuses on speed, involving simple data aggregation, quick pattern matching against known causes, or using a faster, less complex model, providing a prompt, concise explanation or insight regarding the data anomaly. The output generated by the inference system may comprise data representing the analysis results, insights, or the generated report (textual or graphical elements).

In some implementations, the adaptive system may be employed to assist human operators or automated systems in monitoring and controlling complex systems, such as power grids, telecommunication networks, industrial processes, or large-scale computing infrastructure. An example specific implementation involves: receiving input data representing the system's state (e.g., sensor readings, logs, alerts) and a query or command via a determined communication modality; determining an inference-time compute setting based on the modality; and generating an output comprising system status information, diagnostic suggestions, or control recommendations using the determined setting. In one example scenario, an operator requests a long-term trend analysis or an optimized operating plan via an asynchronous reporting interface. This modality permits higher latency, allowing a high compute setting. Generating the output involves the generative model running detailed predictive simulations, performing complex optimization calculations, or using extensive reasoning based on historical data to produce in-depth trend analysis or optimized control parameter recommendations. In another example scenario, an operator uses a voice interface or real-time chat to ask about a critical alert or input an urgent parameter adjustment. The low latency requirement leads to a low compute setting. Generating the output prioritizes immediacy, providing a quick summary of the current alert status, confirming the parameter adjustment instantly, or offering a simple, rapidly generated diagnostic suggestion based on readily available data, using a faster model. The output generated by the inference system may comprise data for system monitoring or control.

In some examples, the inference system functions as a digital assistant (e.g., implemented on a smart speaker, display, or mobile device) that guides a human user through performing a real-world task (such as assembly, cooking, or repairs). An example specific implementation involves: the assistant receiving input related to the task (e.g., user voice commands, text input, visual observations of the task environment via a camera) via a determined communication modality; determining an inference-time compute setting based on the modality and the current task context; and generating output comprising instructions (e.g., voice, text, or visual aids) for the user using the determined setting. In one scenario, the user asks for the next major step in a complex procedure, perhaps via a voice command or text input. This request, seeking detailed guidance, is associated with a moderate latency tolerance. The system determines a higher compute setting. Generating the output using this setting allows the generative model to perform task planning, break down the next step into sub-actions, using reasoning tokens to explain the rationale or safety precautions, resulting in comprehensive, multi-part instructions, including diagrams if outputting to a display. In another example scenario, the user asks a quick clarifying question ("Which way does this part face?") or requires immediate feedback based on a visual observation ("Did I connect this correctly?") via a voice command, demanding a low latency response. The system determines a low compute setting. Generating the output focuses on speed, involving a fast determination of the specific detail, using a faster, smaller model, and providing a concise voice or text answer without elaborate explanation. The system thus dynamically adapts the level of detail and planning effort based on the immediacy implied by the user's communication modality or the nature of their query within the task flow. The output generated by the inference system may comprise instructional data (voice, text, and/or image) for guiding the user.

Further details regarding LLMs will now be described. An LLM can be an autoregressive neural network that generates each token in an output sequence conditioned on the preceding tokens in the output sequence and at least some of the tokens in an input sequence.

For example, the LLM can be configured to process an input sequence of tokens from a vocabulary of tokens to generate an output sequence of tokens from the vocabulary.

More generally, an LLM generative machine learning model can be any appropriate neural network that receives an input sequence made up of tokens selected from a vocabulary and auto-regressively generates an output sequence made up of tokens from the vocabulary. For example, the generative machine learning model can be a Transformer-based neural network or a recurrent neural network-based neural network.

In some situations, the generative machine learning model can be referred to as an autoregressive neural network when the neural network used to implement the neural network auto-regressively generates an output sequence of tokens. More specifically, the auto-regressively generated output is created by generating each particular token in the output sequence conditioned on a current input sequence that includes any tokens that precede the particular text token in the output sequence, i.e., the tokens that have already been generated for any previous positions in the output sequence that precede the particular position of the particular token, and a context input that provides context for the output sequence.

For example, the current input sequence when generating a token at any given position in the output sequence can include the input sequence and the tokens at any preceding positions that precede the given position in the output sequence. As a particular example, the current input sequence can include the input sequence followed by the tokens at any preceding positions that precede the given position in the output sequence. Optionally, the input and the current output sequence can be separated by one or more predetermined tokens within the current input sequence.

More specifically, to generate a particular token at a particular position within an output sequence, the generative machine learning model can process the current input sequence to generate a score distribution (e.g., a probability distribution) that assigns a respective score, e.g., a respective probability, to each token in the vocabulary of tokens. The generative machine learning model can then select, as the particular token, a token from the vocabulary using the score distribution. For example, the generative machine learning model can greedily select the highest-scoring token or can sample, e.g., using nucleus sampling or another sampling technique, a token from the distribution.

As a particular example, the generative machine learning model can be an autoregressive Transformer-based neural network that includes (i) a plurality of attention blocks, at least some of which apply a self-attention operation and (ii) an output subnetwork that processes an output of the last attention block to generate the score distribution.

The generative machine learning model can have any of a variety of Transformer-based neural network architectures. Examples of such architectures include those described in J. Hoffmann, S. Borgeaud, A. Mensch, E. Buchatskaya, T. Cai, E. Rutherford, D. d. L. Casas, L. A. Hendricks, J. Welbl, A. Clark, et al. Training compute-optimal large language models, arXiv preprint arXiv:2203.15556, 2022; J.W. Rae, S. Borgeaud, T. Cai, K. Millican, J. Hoffmann, H. F. Song, J. Aslanides, S. Henderson, R. Ring, S. Young, E. Rutherford, T. Hennigan, J. Menick, A. Cassirer, R. Powell, G. van den Driessche, L. A. Hendricks, M. Rauh, P. Huang, A. Glaese, J. Welbl, S. Dathathri, S. Huang, J. Uesato, J. Mellor, I. Higgins, A. Creswell, N. McAleese, A.Wu, E. Elsen, S. M. Jayakumar, E. Buchatskaya, D. Budden, E. Sutherland, K. Simonyan, M. Paganini, L. Sifre, L. Martens, X. L. Li, A. Kuncoro, A. Nematzadeh, E. Gribovskaya, D. Donato, A. Lazaridou, A. Mensch, J. Lespiau, M. Tsimpoukelli, N. Grigorev, D. Fritz, T. Sottiaux, M. Pajarskas, T. Pohlen, Z. Gong, D. Toyama, C. de Masson d'Autume, Y. Li, T. Terzi, V. Mikulik, I. Babuschkin, A. Clark, D. de Las Casas, A. Guy, C. Jones, J. Bradbury, M. Johnson, B. A. Hechtman, L. Weidinger, I. Gabriel, W. S. Isaac, E. Lockhart, S. Osindero, L. Rimell, C. Dyer, O. Vinyals, K. Ayoub, J. Stanway, L. Bennett, D. Hassabis, K. Kavukcuoglu, and G. Irving. Scaling language models: Methods, analysis & insights from training gopher. CoRR, abs/2112.11446, 2021; Colin Raffel, Noam Shazeer, Adam Roberts, Katherine Lee, Sharan Narang, Michael Matena, Yanqi Zhou, Wei Li, and Peter J Liu. Exploring the limits of transfer learning with a unified text-to-text transformer. arXiv preprint arXiv:1910.10683, 2019; Daniel Adiwardana, Minh-Thang Luong, David R. So, Jamie Hall, Noah Fiedel, Romal Thoppilan, Zi Yang, Apoorv Kulshreshtha, Gaurav Nemade, Yifeng Lu, and Quoc V. Le. Towards a human-like open-domain chatbot. CoRR, abs/2001.09977, 2020; and Tom B Brown, Benjamin Mann, Nick Ryder, Melanie Subbiah, Jared Kaplan, Prafulla Dhariwal, Arvind Neelakantan, Pranav Shyam, Girish Sastry, Amanda Askell, et al. Language models are few-shot learners. arXiv preprint arXiv:2005.14165, 2020. All of which are hereby incorporated by reference in their entirety.

The generative machine learning model can undergo a first phase of pre-training followed by a second phase of fine-tuning. In general, a generative machine learning model such as an LLM can be pre-trained on large amounts of data including data from, but not limited to, webpages, electronic books, software code, electronic news articles, and machine translation data. The generative machine learning model can be pre-trained using unsupervised or self-supervised learning. For example, the generative machine learning model can be pre-trained on a next token prediction task and/or a masked token prediction task. Pre-training on large quantities of diverse data can provide the generative machine learning model with remarkable natural language reasoning capabilities.

Following pre-training, the generative machine learning model can undergo fine-tuning to improve the model's ability to respond to user prompts and queries. Two example types of fine-tuning techniques are supervised fine-tuning (SFT) and reinforcement learning with human feedback (RLHF).

In SFT, a high-quality dataset including examples of input prompts and corresponding responses can be used. This data is typically generated by human annotators. The generative machine learning model can be trained using supervised learning to generate the corresponding responses from the input prompt. SFT requires a much smaller amount of data that used in pre-training.

In RLHF, a reward model can be trained from human preference data regarding different outputs generated from the same input prompt. That is, given an input prompt, different outputs are generated using different models. The models can be a copy of the generative machine learning model with different parameters obtained through checkpointing during pre-training or the models could be entirely unrelated. The input prompt and the different outputs are shown to human assessors and the human assessors are asked to rank the outputs in order of preference with respect to the input prompt. This can be repeated with many different input prompts to generate a dataset of preference data. A reward model can be trained on this preference data to provide a scalar preference value (a "reward" value) for a particular input prompt and generated output pair. The reward model can be based on the generative machine learning model with an additional head for generating the scalar value for example.

The generative machine learning model undergoing training can then be fine-tuned using reinforcement learning based upon the reward values provided by the trained reward model. That is, for a given training prompt, the generative machine learning model generates an output which can be evaluated using the reward model. The parameters of the generative machine learning model can be adjusted using a reinforcement learning update rule based upon the reward value provided by the reward model. In some implementations, a reinforcement learning update rule based upon the Proximal Policy Optimization (PPO) algorithm is used with the generative machine learning model acting as the "policy".

Through such training, it is possible that a generative machine learning model can respond to user queries and instructions in a zero-shot manner, for example, by including appropriate instructions and examples in the prompt provided to the generative machine learning model without the need for further extensive fine-tuning. For example, an LLM-based generative machine learning model can be prompted to caption an input image or other data item.

It will be appreciated that the above is not limited to processing text tokens only. In some implementations, an LLM can process and generate tokens of other modalities including image tokens, audio tokens and video tokens. These models are sometimes also referred to as Visual Language Models (VLMs) or multi-modal language models or some variation of such terms. An example of these multi-modal models includes the Gemini family of models, further details of which can be found in Google Gemini Team, "Gemini: a family of highly capable multimodal models." arXiv preprint arXiv:2312.11805 (2023) which is hereby incorporated by reference in its entirety. A further example is PaliGemma 2, further details of which can be found in Steiner, Andreas, et al. "PaliGemma 2: A Family of Versatile VLMs for Transfer." arXiv preprint arXiv:2412.03555 (2024) which is hereby incorporated by reference it is entirety.

It will be appreciated that the above also applies for any autoregressive neural network that is used in the data generation process. An example of an autoregressive neural network for audio generation is AudioLM, further details of which can found in Z. Borsos, et al. "Audiolm: a language modeling approach to audio generation." IEEE/ACM transactions on audio, speech, and language processing 31 (2023): 2523-2533 which is hereby incorporated by reference in its entirety.

In this specification, the term "configured" is used in relation to computing systems and environments, as well as computer program components. A computing system or environment is considered "configured" to perform specific operations or actions when it possesses the necessary software, firmware, hardware, or a combination thereof, enabling it to carry out those operations or actions during operation. For instance, configuring a system might involve installing a software library with specific algorithms, updating firmware with new instructions for handling data, or adding a hardware component for enhanced processing capabilities. Similarly, one or more computer programs are "configured" to perform particular operations or actions when they contain instructions that, upon execution by a computing device or hardware, cause the device to perform those intended operations or actions.

The embodiments and functional operations described in this specification can be implemented in various forms, including digital electronic circuitry, software, firmware, computer hardware (encompassing the disclosed structures and their structural equivalents), or any combination thereof. The subject matter can be realized as one or more computer programs, essentially modules of computer program instructions encoded on a tangible non-transitory storage medium for execution by or to control the operation of a computing device or hardware. The storage medium can be a storage device such as a hard drive or solid-state drive (SSD), a storage medium, a random or serial access memory device, or a combination of these. Additionally or alternatively, the program instructions can be encoded on a transmitted signal, such as a machine-generated electrical, optical, or electromagnetic signal, designed to carry information for transmission to a receiving device or system for execution by a computing device or hardware. Furthermore, implementations may leverage emerging technologies like quantum computing or neuromorphic computing for specific applications, and may be deployed in distributed or cloud-based environments where components reside on different machines or within a cloud infrastructure.

The term "computing device or hardware" refers to the physical components involved in data processing and encompasses all types of devices and machines used for this purpose. Examples include processors or processing units, graphics processing units (GPUs), tensor processing units (TPUs), and specialized processing hardware such as field-programmable gate arrays (FPGAs) or application-specific integrated circuits (ASICs). In addition to hardware, a computing device or hardware may also include code that creates an execution environment for computer programs. This code can take the form of processor firmware, a protocol stack, a database management system, an operating system, or a combination of these elements. Embodiments may particularly benefit from utilizing the parallel processing capabilities of GPUs, in a General-Purpose computing on Graphics Processing Units (GPGPU) context, where code specifically designed for GPU execution, often called kernels or shaders, is employed. Similarly, TPUs excel at running optimized tensor operations crucial for many machine learning algorithms. By leveraging these accelerators and their specialized programming models, the system can achieve significant speedups and efficiency gains for tasks involving artificial intelligence and machine learning, particularly in areas such as computer vision, natural language processing, and robotics.

A computer program, also referred to as software, an application, a module, a script, code, or simply a program, can be written in any programming language, including compiled or interpreted languages, and declarative or procedural languages. It can be deployed in various forms, such as a standalone program, a module, a component, a subroutine, or any other unit suitable for use within a computing environment. A program may or may not correspond to a single file in a file system and can be stored in various ways. This includes being embedded within a file containing other programs or data (e.g., scripts within a markup language document), residing in a dedicated file, or distributed across multiple coordinated files (e.g., files storing modules, subprograms, or code segments). A computer program can be executed on a single computer or across multiple computers, whether located at a single site or distributed across multiple sites and interconnected through a data communication network. The specific implementation of the computer programs may involve a combination of traditional programming languages and specialized languages or libraries designed for GPGPU programming or TPU utilization, depending on the chosen hardware platform and desired performance characteristics.

In this specification, the term "engine" broadly refers to a software-based system, subsystem, or process designed to perform one or more specific functions. An engine is typically implemented as one or more software modules or components installed on one or more computers, which can be located at a single site or distributed across multiple locations. In some instances, one or more dedicated computers may be used for a particular engine, while in other cases, multiple engines may operate concurrently on the same one or more computers. Examples of engine functions within the context of AI and machine learning could include data pre-processing and cleaning, feature engineering and extraction, model training and optimization, inference and prediction generation, and post-processing of results. The specific design and implementation of engines will depend on the overall architecture and the distribution of computational tasks across various hardware components, including CPUs, GPUs, TPUs, and other specialized processors.

The processes and logic flows described in this specification can be executed by one or more programmable computers running one or more computer programs to perform functions by operating on input data and generating output. Graphics processing units (GPUs) and tensor processing units (TPUs) can be utilized to enable concurrent execution of aspects of these processes and logic flows, significantly accelerating performance. This approach offers significant advantages for computationally intensive tasks often found in AI and machine learning applications, such as matrix multiplications, convolutions, and other operations that exhibit a high degree of parallelism. By leveraging the parallel processing capabilities of GPUs and TPUs, significant speedups and efficiency gains compared to relying solely on CPUs can be achieved. These processes and logic flows can be implemented using specialized processing hardware, such as field-programmable gate arrays (FPGAs) or application-specific integrated circuits (ASICs), for even greater performance or energy efficiency in specific use cases.

Computers capable of executing a computer program can be based on general-purpose microprocessors, special-purpose microprocessors, or a combination of both. They can utilize any type of central processing unit (CPU) graphics processing units (GPUs), tensor processing units (TPUs), and other machine learning accelerators. GPUs, TPUs, and other machine learning accelerators may be employed to enhance performance, particularly for tasks involving artificial intelligence and machine learning. These accelerators may work in conjunction with CPUs, handling specialized computations while the CPU manages overall system operations and other tasks. The specific configuration of processing units and memory will depend on factors like the complexity of the AI model, the volume of data being processed, and the desired performance and latency requirements. Embodiments can be implemented on a wide range of computing platforms, from small embedded devices with limited resources to large-scale data center systems with high-performance computing capabilities. The system may include storage devices like hard drives, SSDs, or flash memory for persistent data storage.

Computer-readable media suitable for storing computer program instructions and data encompass all forms of non-volatile memory, media, and memory devices. Examples include semiconductor memory devices such as read-only memory (ROM), solid-state drives (SSDs), and flash memory devices; hard disk drives (HDDs); optical media; and optical discs such as CDs, DVDs, and Blu-ray discs. The specific type of computer-readable media used will depend on factors such as the size of the data, access speed requirements, cost considerations, and the desired level of portability or permanence.

To facilitate user interaction, embodiments of the subject matter described in this specification can be implemented on a computing device equipped with a display device, such as a liquid crystal display (LCD) or an organic light-emitting diode (OLED) display, for presenting information to the user. Input can be provided by the user through various means, including a keyboard), touchscreens, voice commands, gesture recognition, or other input modalities depending on the specific device and application. Additional input methods can include acoustic, speech, or tactile input, while feedback to the user can take the form of visual, auditory, or tactile feedback. Furthermore, computers can interact with users by exchanging documents with a user's device or application. This can involve sending web content or data in response to requests or sending and receiving text messages or other forms of messages through mobile devices or messaging platforms. The selection of input and output modalities will depend on the specific application and the desired form of user interaction.

Machine learning models can be implemented and deployed using machine learning frameworks, such as TensorFlow or JAX. These frameworks offer comprehensive tools and libraries that facilitate the development, training, and deployment of machine learning models.

Embodiments of the subject matter described in this specification can be implemented within a computing system comprising one or more components, depending on the specific application and requirements. These may include a back-end component, such as a back-end server or cloud-based infrastructure; an optional middleware component, such as a middleware server or application programming interface (API), to facilitate communication and data exchange; and a front-end component, such as a client device with a user interface, a web browser, or an app, through which a user can interact with the implemented subject matter. For instance, the described functionality could be implemented solely on a client device (e.g., for on-device machine learning) or deployed as a combination of front-end and back-end components for more complex applications. These components, when present, can be interconnected using any form or medium of digital data communication, such as a communication network like a local area network (LAN) or a wide area network (WAN) including the Internet. The specific system architecture and choice of components will depend on factors such as the scale of the application, the need for real-time processing, data security requirements, and the desired user experience.

The computing system can include clients and servers that may be geographically separated and interact through a communication network. The specific type of network, such as a local area network (LAN), a wide area network (WAN), or the Internet, will depend on the reach and scale of the application. The client-server relationship is established through computer programs running on the respective computers and designed to communicate with each other using appropriate protocols. These protocols may include HTTP, TCP/IP, or other specialized protocols depending on the nature of the data being exchanged and the security requirements of the system. In certain embodiments, a server transmits data or instructions to a user's device, such as a computer, smartphone, or tablet, acting as a client. The client device can then process the received information, display results to the user, and potentially send data or feedback back to the server for further processing or storage. This allows for dynamic interactions between the user and the system, enabling a wide range of applications and functionalities.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A method of contextually adapting inference-time compute of an inference system comprising a trained generative model, the method being implemented by one or more data processing apparatus and comprising:
determining a communication modality for data transfer to and/or from the inference system;
determining an inference-time compute setting for the inference system in dependence on the communication modality, and
generating an output of the inference system in dependence on the inference-time compute setting.

2. The method of claim 1, wherein determining the inference-time compute setting comprises determining an amount of reasoning tokens to be used when generating the output of the inference system.

3. The method of claim 1 or claim 2, wherein generating an output of the inference system in dependence on the inference-time compute setting comprises generating a number of candidate outputs, wherein the inference-time compute setting determines the number of candidate outputs to generate in response to a given input.

4. The method of claim 1, wherein:
the inference system comprises a plurality of trained generative models,
determining the inference-time compute setting comprises selecting a selected one of the plurality of trained generative models, and
generating the output of the inference system in dependence on the inference-time compute setting comprises generating an output using the selected one of the plurality of trained generative models.

5. The method of claim 4, wherein the plurality of trained generative models have different numbers of parameters.

6. The method of any one of the preceding claims, wherein the inference-time compute setting is based on a latency condition for the communication modality.

7. The method of any one of the preceding claims, wherein the communication modality is selected from a communication modality group which includes an asynchronous communication modality.

8. The method of claim 7, wherein the communication modality group includes a voice communication modality.

9. The method of claim 7 or 8, wherein the communication modality group includes a chat-based communication modality.

10. The method of any one of the preceding claims, comprising receiving a generative model input, wherein the communication modality is a communication modality via which the generative model input was received.

11. The method of any one of the preceding claims, comprising:
receiving a generative model input and generating, in response, a first generative model output using the inference system, wherein the first generative model output is communicated via a first communication modality,
generating, in response to the generative model input, a second generative model output using the inference system, wherein the second generative model output is communicated via a second communication modality, and
wherein determining an inference-time compute setting for the inference system in dependence on the communication modality comprises determining an inference-time compute setting for generating the second generative model output.

12. The method of claim 11, wherein the inference-time compute setting for generating the second generative model output causes the inference system to generate the second generative model output using an increased amount of computing resources compared to the computing resources required for generating the first generative model output.

13. The method of claim 12, wherein generating the second generative model output causes the inference system to generate the second generative model output using an increased number of floating point operations compared to the number of floating point operations used to generate the first generative model output.

14. Data processing apparatus configured to perform the method of any one of claims 1 to 13.

15. One or more non-transitory computer-readable media storing instructions that are executable by one or more data processing apparatus to cause the one or more data processing apparatus to perform the method of any one of claims 1 to 13.
